# EUROPÄISCHE PATENTANMELDUNG

(11) **EP 2 397 502 A1**
(43) Veröffentlichungstag der Anmeldung: **21.12.2011**
(21) Anmeldenummer: 11169946.8
(22) Anmeldetag: 15.06.2011
(51) Int. Cl.: C08B 37/00, C11D 3/22, C11D 3/37

(54) **Waschaktive Zusammensetzungen enthaltend anionisch modifizierte Cyclodextrine**

(30) Priorität: 15.06.2010 DE 102010023790
(71) Anmelder: Heinrich-Heine-Universität Düsseldorf, 40225 Düsseldorf (DE)
(72) Erfinder: Bezdushna, Ella, 33028 Tolmezzo (IT); Ritter, Helmut, 42111 Wuppertal (DE)
(74) Vertreter: TER MEER - STEINMEISTER & PARTNER GbR

(57) **Zusammenfassung**

Die Erfindung betrifft eine waschaktive Zusammensetzung, die eine Reinigungsfunktion aufweist. Die Erfindung betrifft ferner eine waschaktive Zusammensetzung, enthaltend ein kationisch modifiziertes Polymer und ein anionisch modifiziertes alpha-, beta- und/oder gamma-Cyclodextrin (Anion-Kation-Tensid-Komplex). Des Weiteren betrifft die Erfindung die Herstellung dieser waschaktiven Zusammensetzung sowie deren Verwendung, insbesondere zur Textilveredlung, zur schonenden Reinigung von Textilien und Oberflächen, für die Oral-und/oder Wundreinigung, in allen Arten von Haushalts-Produkten, einschließlich Reinigungs-und Körperpflegemittel und in den Bereichen Gartentechnik und Pflanzenschutz. Die Erfindung betrifft ferner ein anionisch modifiziertes Cyclodextrin, welches eine Tensidfunktion besitzt und welches an einer oder mehreren OH-Gruppen mit einer Alkylgruppe verestert oder verethert ist, wobei die Alkylkette mindestens eine Carboxylatgruppe trägt.

## Beschreibung

### Zusammenfassung der Erfindung

Die Erfindung betrifft eine waschaktive Zusammensetzung, die eine Reinigungsfunktion aufweist. Die Erfindung betrifft ferner eine waschaktive Zusammensetzung, enthaltend ein kationisch modifiziertes Polymer und ein anionisch modifiziertes alpha-, beta- und/oder gamma-Cyclodextrin (Anion-Kation-Tensid-Komplex). Des Weiteren betrifft die Erfindung die Herstellung dieser waschaktiven Zusammensetzung sowie deren Verwendung, insbesondere zur Textilveredlung, zur schonenden Reinigung von Textilien und Oberflächen, für die Oral-und/oder Wundreinigung, in allen Arten von Haushalts-Produkten, einschließlich Reinigungs-und Körperpflegemittel und in den Bereichen Gartentechnik und Pflanzenschutz. Die Erfindung betrifft ferner ein anionisch modifiziertes Cyclodextrin, welches eine Tensidfunktion besitzt und welches an einer oder mehreren OH-Gruppen mit einer Alkylgruppe verestert oder verethert ist, wobei die Alkylkette mindestens eine Carboxylatgruppe trägt.

In einem weiteren Aspekt betrifft die Erfindung wässrige Lösungen, wässrige Gele, Pellets, Perlen oder Pulver, die als wasserverdünnbare mulifunktionelle Wasch- und Reinigungsmittel geeignet sind und Anteile an anionisch- und/oder kationisch- modifizierten Cyclodextrinen in Kombination mit anionisch und/oder kationisch modifizierten linear oder verzweigten synthetischen und/oder aus natürlichen Quellen verfügbaren Polymeren enthalten, sowie anionisch- und/oder kationischmodifizierte Cyclodextrine als Tensid für industrielle Anwendungen als Emulsifier (Emulsionspolymerisation).

### Stand der Technik

Das World Allergy Organization Journal (2009) hat festgestellt, dass einer von vier Menschen auf der Welt unter Allergien leidet. In Deutschland sind 15-20 % der Bevölkerung von Allergien betroffen. 7 %, ca. fünf Millionen Deutsche, leiden unter Ekzemen, die durch Hautkontakt mit allergieauslösenden Substanzen entstehen. Über eine Million Deutsche reagieren allergisch auf Duftstoffe. Allergische Reaktionen können insbesondere durch die Inhaltstoffe von Waschmitteln und waschaktiven Substanzen verursacht und ausgelöst werden.

Waschmittel für Textilien, wie sie in Gel-, Flüssig-, Perl-, Pulver- oder Tablettenform im Handel erhältlich sind, sollen Gewebefasern schonend reinigen, ohne diese zu beschädigen. Mögliche Rückstände in den Textilien sollen keine allergiebedingten Hautreaktionen hervorrufen. Da Reste der Waschmittel in das Abwassersystem gelangen, besteht ein großes Interesse darin, dass Gewässer und Böden mit den darin befindlichen Organismen geschont werden. Dies gilt in ähnlicher Weise auch für Haushaltsreiniger, die sowohl die Umwelt nicht belasten und dem Verbraucher keine gesundheitlichen Schädigungen zufügen sollen.

Üblicherweise enthalten Waschmittel für Textilien anionische, kationische und/oder nichtionische Tenside sowie Aromastoffe, Phosphate, Zeolithe, Polysäuren, Bleichmittel, optische Aufheller, Enzyme und natürliche Seifen.

Zur Wasserenthärtung werden den Waschmitteln üblicherweise Polysäuren wie Polyacrylsäure, Polyasparaginsäure oder Polyphosphorsäure zugesetzt. Neuerdings enthalten Waschmittel auch Zeolithe zur Entkalkung.

Solche Zusammensetzungen weisen zwar ein gutes Waschvermögen auf, ihre umwelt- und insbesondere hautschonenden Eigenschaften sind jedoch häufig unzureichend. Die üblich verwendeten kationischen, anionischen und/oder nichtionischen Tenside werden nicht vollständig mit dem Waschwasser abgeführt, sondern es verbleiben auch bei sorgfältigem Spülen stets Waschmittelreste in der Kleidung. Diese führen bei empfindlicher Haut zu Irritationen oder allergischen Reaktionen. Es können sogar Inhaltsstoffe durch die Haut in den menschlichen Körper gelangen und hier entsprechend schädliche Wirkungen entfalten.

Zur Lösung der oben genannten Probleme wurde im Stand der Technik die Verwendung von modifizierten Cyclodextrinen in Kombination mit Polyquaternium (Polyquats), die einen Salzkomplex bilden können, in Waschmittelzusammensetzungen vorgeschlagen. Polyquats sind wegen ihrer filmbildenden und antistatischen Eigenschaften in vielen Körperpflegeprodukten enthalten. Die DE 10 2007 013 144 A1 offenbart die Verwendung von Polyquats in Shampoos, in denen sie zur Reparatur und Pflege der Haarstruktur beitragen.

In der WO 2004/085589 wird die Verwendung von Cyclodextrin (CD) und seinen Derivaten in Wasch- und Reinigungsmitteln beschrieben. Cyclodextrine (CD) sind eine Klasse von Verbindungen, die zu den cyclischen Oligosacchariden gehören. Sie stellen ringförmige Abbauprodukte von Stärke dar. Sie bestehen aus α-1,4-glykosidisch verknüpften Glucosemolekülen. Dadurch entsteht eine toroidale Struktur mit einem zentralen Hohlraum. Den Ring aus sechs Glucoseeinheiten nennt man α-Cyclodextrin, den aus sieben β-Cyclodextrin und den aus acht γ-Cyclodextrin. Die gebräuchlichsten CDs sind somit Rezepturwirkstoffe von α-CD, β-CD und γ-CD, welche Reste von 6, 7 bzw. 8 D-Glucopyranosyleinheiten enthalten.

CD-Einlagerungskomplexe von hydrophoben Wirkstoffen sind nützlich in der Herstellung flüssiger sowie fester Waschmittel. Die Einlagerungskomplexe sind beständig und fähig, ihre aktiven Bestandteile allmählich (schrittweise) während der Wasch- und Spülzyklen freizugeben. Die Zusammensetzung eines festen, pulverförmigen hydrophoben Waschmittels, welches auch in Anwesenheit weiterer, üblicherweise in den Rezepturen von Waschmittel verwendeter Bestandteile beständig ist, beinhaltet mindestens einen hydrophoben Wirkstoff als Einlagerungskomplex in einem CD.

CDs haben eine hydrophobe Gast-Höhlung und ein hydrophiles Äußeres. Sie werden z. B. verwendet, um Einlagerungskomplexe von geruchstragenden und leicht oxydierenden, vielfach ungesättigten Ölen zu bilden, wie in US 4,775,749, US 4, 777,162, US 4,831,022 und US 5,189,149 beschrieben. Die Einlagerung von Duftölen aus etwa den gleichen Beweggründen ist in US 6,287,603 beschrieben. Die vorhergehenden Produkte werden gewöhnlich in Pulverform verwendet.

Die DE 40 35 378 beschriebt die Verwendung von CDs in Waschmittelrezepturen, wobei Textilien mit CDs behandelt werden, welche dann mit Hilfe von traditionellen Zellulose-reaktiven Vernetzern mit den Textilien verknüpft werden. Die Textilien, welche jetzt auf ihrer Oberfläche CD-Moleküle tragen, erweisen sich als geruchsabweisend. Die CDs absorbieren geruchstragende Moleküle während des Tragens der Textilien. Sportlersocken mit den oben genannten gebundenen CDs zeigten einige Erfolge.

Allerdings haben die bisher im Stand der Technik verwendeten CDs den Nachteil, dass sie in Wasch- und Reinigungsmitteln wenig wirksam sind, da sie als einfache Zusatzkomponente schnell durch den Waschprozess entfernt werden und daher keine Wirkung als Wirkkomponente, z. B. gegen schlechte Gerüche, ausüben können.

Problematisch bei den aktuell im Markt befindlichen Zusammensetzungen der Wasch- und Reinigungsmittel gemäß dem Stand der Technik ist ferner das mögliche Auftreten von Atemwegs- und/oder Hautirritationen, die beispielsweise durch Aromastoffe wie Limonen oder Zitronenöl ausgelöst werden. Obwohl dieses natürliche Pflanzenstoffe sind, haben sie auch auf Kleinstlebewesen eine negative Wirkung, da sie in der Natur zur Abwehr von Fressfeinden dienen. Daher besteht auch für die Qualität der kontaminierten Gewässer ein Gefahrenpotential.

### Aufgabe der Erfindung

Die Aufgabe der vorliegenden Erfindung bestand nun darin, multifunktionelle, wasch- und reinigungsaktive Zusammensetzungen zu finden, in welchen die Nachteile wie sie oben für die Zusammensetzungen des Stands der Technik beschrieben sind, vermieden werden. Insbesondere sollen wasch- und reinigungsaktive Zusammensetzungen gefunden werden, die keine Hautirritationen verursachen, nachhaltig Gerüche vermindern, die Faser schonen und nahezu keine umweltbezogenen Nachteile aufweisen.

### Lösung der Aufgabe

Die Aufgabe wurde erfindungsgemäß dadurch gelöst durch Zusammensetzungen mit den Merkmalen der vorliegenden Ansprüche. Insbesondere wurde die Aufgabe durch die Bereitstellung einer waschaktiven Zusammensetzung gelöst, die ein kationisch modifiziertes Polymer und ein anionisch modifiziertes alpha-, beta- und/oder gamma-Cyclodextrin enthält, sowie durch deren Verwendung zum Waschen von harten Oberflächen und Textilien und für die Oral- und/oder Wundreinigung.

Es wurde überraschend gefunden, dass anionisch und/oder kationisch modifizierte Cyclodextrine in Kombination mit entgegengesetzt geladenen anionisch und/oder kationisch modifizierten linear oder verzweigten synthetischen und/oder aus natürlichen Quellen verfügbaren Polymeren als wasch- und reinigungsaktive Mischung, anionisch- und/oder kationisch- modifizierte Cyclodextrine alleine als Tensid für Industrielle Anwendungen als Emulsifier (Emulsionspolymerisation) verwendet werden können und die hierin beschriebenen Vorteile aufweisen. Weitere überraschende Anwendungen der hierin beschriebenen Zusammensetzungen liegen in den Bereichen Kosmetik, Gartentechnik und Pflanzenschutz.

Die Aufgabe der Erfindung wurde ferner dadurch gelöst, dass die beanspruchten Cyclodextrine und/oder Anteile an nichtionischen verzweigten synthetischen und/oder aus natürlichen Quellen verfügbaren polymeren Komponenten tragen können und dass weitere Additive beigefügt sein können, ohne die Beständigkeit der Zusammensetzung zu beeinträchtigen.

### Beschreibung der Erfindung

Die erfindungsgemäße waschaktive Zusammensetzung ist insbesondere dadurch gekennzeichnet, dass sie ein kationisch modifiziertes Polymer und ein anionisch modifiziertes alpha-, beta- und/oder gamma-Cyclodextrin (CD) enthält.

Besonders beansprucht wird eine Zusammensetzung, die neben der waschaktiven Wirkung weitere positive Eigenschaften vereinigt, wie beispielsweise Faserschutz, Geruchsverminderung, Conditioner- und Repaireffekt sowie deren Einsatz zur gleichzeitigen Reinigung unterschiedlicher Stoffarten wie beispielsweise synthetischer (z. B. Polyester, Polyacryl und/oder Viskose) und nichtsynthetischer Textilien (z. B. Seide, Schurwolle und/oder Baumwolle). Überraschend wurde gefunden, dass anionisch und/oder kationisch modifizierte CDs mit überwiegend gegensätzlich geladenen Polyelektrolyten aktive Salzkomplexe bilden, welche diese erwünschten Eigenschaften zeigen.

### Waschalitive Zusammensetzung

Im Rahmen der Erfindung versteht man unter "waschaktiver Zusammensetzung" eine Zusammensetzung, die zusammen mit Wasser aufgrund ihrer Bestandteile in der Lage ist, Schmutz aufzunehmen. Dabei werden feste oder flüssige Verunreinigungen, die sich auf Oberflächen wie beispielsweise Textilien befinden, in eine solche Form überführt, dass sie in Wasser gelöst oder suspendiert und damit von der Oberfläche entfernt werden können. Unter waschaktiver Eigenschaft versteht man dabei im Rahmen der Erfindung die Eigenschaft einer Zusammensetzung, die Grenzflächenspannung zwischen Wasser, Verunreinigungen und Textilien zu beeinflussen.

### Cyclodextrine (CDs)

Der Begriff Cyclodextrin (CD) im Sinne der Erfindung umfasst jedes beliebige der bekannten CDs, wie unsubstituierte CDs mit sechs bis 12 Glucoseeinheiten, insbesondere alpha-, beta- und gamma-CD und/oder deren Derivate und/oder Gemische hiervon, welche in der Lage sind, waschaktive Eigenschaften zu zeigen.

Bevorzugte erfindungsgemäße CDs sind α-CDs, β-CDs und γ-CDs und deren Derivate. Die durch die enzymatische Stärkeumwandlung hergestellten α-CDs, β-CDs und γ-CDs unterscheiden sich im Durchmesser ihrer hydrophoben Kavität und eignen sich generell zum Einschluss von geeigneten Substanzen. CD-Derivate werden durch chemische Modifizierung an den OH-Gruppen der CDs hergestellt. Beispiele hierfür sind die Veresterung, Veretherung, Oxidation, Hydroxypropylierung mittels Propylenoxid, Hydroxyethylierung und/oder die Alkylierung, wie beispielsweise Methylierung mit Hilfe von Methylhalogeniden. Die so erhaltenen modifizierten CDs sind allgemein besser wasserlöslich als native CDs und können durch Einschluss hydrophober Substanzen und Bildung wasserlöslicher Komplexe solche an sich wasserunlöslichen Substanzen im wässrigen Medium solubilisieren.

Als erfindungsgemäß geeignete CDs können beispielsweise Methyl-beta-CD, Hydroxyethyl-beta-CD, Hydroxypropyl-beta-CD mit unterschiedlichen Substitutionsgraden verwendet werden.

Die erfindungsgemäß bevorzugten CDs, die anionisch und/oder kationisch, vorzugsweise anionisch modifiziert sein können, in Kombination mit entgegengesetzt geladenen anionisch und/oder kationisch, vorzugsweise kationisch modifizierten Polymeren, umfassen alle CDs und deren Derivate mit waschaktiven Eigenschaften. Weiterhin können nicht ionische CDs, wie alpha-, beta-, gamma-CD, die unmodifiziert, O-alkyliert, O-hydroxyalkyliert und/oder mit Carbonsäuren unterschiedlicher Kettenlänge, die unmodifiziert oder eine oder zwei OH-Gruppen tragen können oder verestert sein können, in der erfindungsgemäßen waschaktiven Zusammensetzung enthalten sein. Die erfindungsgemäßen CDs können ferner als Mischungen verschiedener CDs vorliegen, wie Mischungen aus kationisch und/oder anionisch modifizierten CDs und/oder nichtionische CDs. Im Sinne der vorliegenden Erfindung besonders geeignete ionische CD-Derivate sind anionisch modifizierte CDs, wie sie z. B. durch ringöffnende Umsetzung von reinem und/oder teilalkyliertem und/oder teilverestertem CD mit einem cyclischen Anhydrid, wie Phthalsäureanhydrid, reinem oder C-alkyliertem Bernsteinsäureanhydrid, Pyrromelithsäure-anhydrid, reinem oder C-alkyliertem Glutaranhydrid, (z. B. β-CD Octenyl-succinatester) reinem oder C-alkyliertem Maleinsäureanhydrid (z. B. β-CD Maleinate), cyclischen Sulfonaten (z. B. β-CD-sulfobutylether) und oder durch Oxidation erhalten werden können. Geeignet sind auch Veretherungsprodukte von Carbonsäurederivaten, wie z. B. carboxyalkylierte, besonders carboxymethylierte Cyclodextrine. Die erfindungsgemäß beanspruchten anionisch modifizierten CD-Derivate können zusätzlich Ester und/oder Ethergruppen und/oder etherverknüpfte Hydroxy-Alkoxy-Gruppen enthalten. Desweiteren weisen die erfindungsgemäßen bevorzugten anionisch modifizierten CDs bevorzugt Carboxylat, Sulfat- und/oder Phosphatgruppen auf.

Weitere erfindungsgemäße CD-Derivate sind ferner solche, welche wenigstens eine Gruppe aus einer sulfonischen Säuregruppe, einer sulfonischen Säure-Salz-Gruppe, einer Ammonium-Salz-Gruppe, einer phosphorischen Säuregruppe, einer Carboxyl-Gruppe, einer carboxylischen Säure-Salz-Gruppe und einer Hydroxylgruppe aufweisen.

Die bevorzugten anionisch modifizierten CD-Derivate können auch durch partielle Oxidation der primären Hydroxylgruppen in 6-Position zu Carbonsäuren sowie deren Salze erhalten werden.

Die Umsetzung kann beispielsweise bevorzugt dadurch erfolgen, dass ein CD aus der Gruppe der unmodifizierten und/oder modifizierten alpha-CDs, beta-CDs oder gamma-CDs mit einem Anhydrid in einem Molverhältnis von CD zu Anhydrid von 1:1 bis 1:10, bevorzugt von 1:1,5 bis 1:5, besonders bevorzugt 1:2 bis 1:3, in Substanz oder in einem Lösemittel durchgeführt wird. Weiterhin bevorzugt ist die Veretherung von CD mit Halogen-Carbonsäuren, insbesondere mit Chloressigsäure.

In einer besonders bevorzugten Ausführungsform ist das erfindungsgemäße anionisch modifizierte CD an 1, 2, 3, 4, 5, 6 oder mehr OH-Gruppen mit einer C₆-C₂₀, bevorzugt C₆-C₁₀, besonders bevorzugt C₈-Alkylkette verestert oder verethert, wobei die Alkylkette mindestens eine Carboxylatgruppe trägt.

Die erfindungsgemäßen CDs können ferner eingesetzt werden, um Gastmoleküle wie bsp. Aromastoffe im Hohlraum so zu binden, dass sie anschließend, vorzugsweise bei der Trocknung von Textilien, langsam freigesetzt werden.

Weitere Anwendungen der erfindungsgemäßen CDs liegen in der Wirkstofffreisetzung bei Arzneimitteln sowie in der Verwendung in Nahrungsmitteln, Kosmetik und anderen Produkten.

Das erfindungsgemäße, vorzugsweise anionisch modifizierte CD wird bevorzugt zum Waschen von Textilien und sonstigen harten Oberflächen verwendet wie beispielsweise die Oberflächen von Möbeln und anderen Einrichtungsgegenständen sowie von Wäsche, Geschirr, Haaren, Haut, Obst, Gemüse oder für die Oral- und/oder Wundreinigung.

Kationisch modifizierte CDs können bevorzugt auch bei der Herstellung von Medikamenten verwendet werden, wie in T. Loftsson et al., Die Entwicklung der Medikamente und der industriellen Pharmazie, 24(4), 0.365-370 (1998) beschrieben. Insbesondere wurde herausgefunden, dass kationische CD-Derivate, wie 2-Hydroxy-3-trimethyl-ammoniopropyl-beta-CD die Lösungswirkung von organischen Verbindungen in Wasser vermindern, verglichen mit nicht angereicherten CDs, wie 2-Hydroxypropyl-Beta-CD oder methyliertes Beta-CD. Ferner wurde vorliegend herausgefunden, dass die kationisch modifizierten CD-Verbindungen starke antimikrobische Wirkstoffe sind, besonders wirksam gegen Bakterien und Pilze. Weiterhin sind die genannten Verbindungen auch einsetzbar gegen Viren.

Die erfindungsgemäßen CDs weisen zahlreiche Vorteile auf. Diese bestehen zum einen darin, dass sie die Wasserlöslichkeit von hydrophoben Reagenzien erhöhen. Außerdem können sie die chemische und physikalische Stabilität verschiedener Komponenten, wie z. B. Proteinen und Antioxidantien, verbessern. Die erfindungsgemäßen CDs können auch zur Geschmacksverstärkung eingesetzt werden. Alle natürlichen CD-Derivate sind untoxisch und können vom menschlichen Körper im Gastrointestinaltrakt vollständig abgebaut werden. Darüber hinaus handelt es sich um einen Rohstoff, der nachhaltig gewonnen wird und bereits modifiziert oder nativ kommerziell erhältlich ist.

Die erfindungsgemäßen CDs werden somit verwendet, um Vorteile, die mit der Komplexierung einhergehen, nutzen zu können. Dazu zählen die verbesserte Löslichkeit der Gastmoleküle, Stabilisierung gegenüber Lichteinstrahlung, Hitze und Oxidation, die Maskierung unerwünschter physiologischer Effekte sowie die Reduktion des Dampfdrucks etc. Insbesondere die CD-Derivate mit hoher Wasserlöslichkeit können die im Folgenden beschriebenen Gastmoleküle wie bsp. Wirkmoleküle einschließen.

### Gastmoleküle

In einer besonders bevorzugten Ausführungsform befindet sich in dem CD, vorzugsweise in dem anionisch modifizierten CD, ein Gastmolekül. Im Sinne dieser Erfindung versteht man unter einem Gastmolekül jegliches Molekül, welches mit dem erfindungsgemäßen Cyclodextrin einen Komplex bilden kann. Das Gastmolekül ist bevorzugt ein Molekül ausgewählt aus der Gruppe der Aromastoffe, Stabilisatoren gegen UV Licht, Oxidation oder Ozon, und/oder ein Wirkstoff gegen Insekten, wie im folgenden näher erläutert. Das Gastmolekül kann ferner ein Wirkstoff sein. Wirkstoffe sind insbesondere Vitamine, bioaktive Wirkstoffe in Medizin und Pflanzenschutzmittel, Wirkstoffe aus der Gruppe der Insekten-Repellents, UV-, und Lichtschutzmittel sowie Antioxidantien gegen Ozon und Additive wie z. B. Aromen, Duftstoffe, Enzyme und Öle.

Geeignete Aromastoffe sind natürliche Aromen und Aroma-Extrakte wie bsp. Vanillin, Menthol, Zimt- und Orangenöl sowie Mischungen von Aromastoffen. Weitere geeignete Aromastoffe sind künstliche Aromen, insbesondere solche, die zur Klasse der Aromaten, Ester, Terpene, Alkylpyrazine, Aldehyde oder Ketone gehören.

Im Sinne dieser Erfindung versteht man unter Stabilisatoren UV-Stabilisatoren bzw. UV-Absorber, welche als Lichtschutzmittel geeignet sind. UV-Stabilisatoren sind chemische Verbindungen, die in die physikalischen und chemischen Prozesse des lichtinduzierten Abbaus eingreifen können. Beispiele dafür sind die Gruppe der Benzophenone, Benzotriazole, sowie Octocrylen, Avobenzone, Etocrynene, Octylmethoxycinnamat, Salicylsäureester, Zimtsäureester-Derivate, Resorcinmonobenzoate, Oxalsäureanilide, Hydroxybenzoesäureester, sterisch gehinderte Amine und Triazine, wobei die 2-Hydroxybenzotriazole und die Triazine bevorzugt sind.

Im Sinne dieser Erfindung sind bevorzugte Vitamine die bekannten wasser- oder fettlöslichen Vitamine, vorzugsweise ausgewählt aus Vitamin C, Vitamin A, Vitamine der B-Gruppe, insbesondere Vitamin B2 und Vitamin B6, Vitamin E, Vitamin H, Vitamin D sowie Vitaminmischungen, bevorzugt eine Mischung aus Vitamin A, Vitamin E und Vitamin D.

Bevorzugte optische Aufheller sind Bis-benzoxazole, Phenylcumarine, Bis-sterylbiphenyle, Triazin-phenylcumarin sowie Mischungen daraus.

Im Sinne dieser Erfindung versteht man unter Wirkstoffen gegen Insekten ein Repellent, der von einem Organismus über den Geruchssinn wahrgenommen wird und der diesen abschreckt, ohne ihn zu töten. Geeignete Wirkstoffe bzw. natürliche Repellentien gegen Insekten sind beispielsweise ätherische Öle von Gewürznelken und verschiedenen Vertretern der Lippenblütler, insbesondere vor allem Basilikum, Minze, Lavendel, Salbei oder Thymian. Künstliche Repellents sind beispielsweise Diethyltoluamid (DEET), Icaridin (Picaridin), IR3535 (Ethylbutylacetylaminopropionat).

Ein Wirkstoff in den Anwendungsbereichen wie Medizin, Pharmazie, Biotechnologie und Kosmetik ist ein Stoff, der eine Bioaktivität zeigt. Eine Aufgabe der Erfindung besteht darin, diese Wirkstoffe in wasserlöslicher Form bereitzustellen und vor schädigenden äußeren Einflüssen wie Sauerstoff, Licht, Feuchtigkeit, Wärme und Strahlung oder auch vor Reaktion mit anderen Stoffen zu schützen und hierdurch seine Nativität respektive seine Bioverfügbarkeit und Funktionalität zu erhalten. Im Bereich Kosmetik können modifizierte Cyclooligosaccharide wie die erfindungsgemäßen CDs die Barrierewirkung der Haut reduzieren und damit die dermale Penetration von Aktivsubstanzen, die nicht komplexiert werden, erhöhen.

Im Sinne der Erfindung sind bevorzugte Aktivwirkstoffe ausgewählt aus Radikalfängern, vorzugsweise Ferulischer Säure (ein Antioxydant, das freie Radikale wie Hydroxylradikale, Superoxide oder Stickstoffoxid neutralisiert, die oxydierenden Schaden der Zellenmembranen und der DNA verursachen könnten); Bleichmittel, vorzugsweise 18-beta Glycyrrhetinsäure; antimikrobielle Substanzen wie beispielsweise Bakterizide, vorzugsweise Climbazol; Fungizide und Antiseptika, bevorzugt Ciclopirox-Olamin; Desinfektiva, vorzugsweise Chloroxylenol und Bronopol; Fettalkohole, Fettsäureester, Vitamine, Mineralstoffe, Aminosäuren sowie Mischungen daraus.

Pflanzenschutzmittel sind chemische oder biologische Wirkstoffe und Zubereitungen, welche die Pflanze vor Schädlingen, Krankheiten, Insekten, Pilzen, oder Tieren schützen kann. Bevorzugte Wirkstoffe sind substituierte einfache Aromaten, wie z.B. Bromoxynil, chlororganische Substanzen, wie Chlorothalonil, Chlorsulfuron und Chlorobenzilate, weitere Wirkstoffe in zugelassenen Pflanzenschutzmitteln innerhalb der Europäischen Union sowie Mischungen der zuvor genannten Substanzen.

Antioxidantien als Schutz gegen Ozon sind beispielsweise Vitamine, vorzugsweise Vitamin A, Beta-Carotin und Carotinderivate, Vitamin E und Tokopherolderivate, Vitamin C, lipidlösliches Vitamin C sowie ferner weitere Naturstoffe, insbesondere Flavonoide, Anthozyane, Phenolsäuren und -ester, Lignane, Hydroxyterpene, sowie Superoxid Dismutase (SOD), Glutathionperoxidase (GPx), Glutathion, Katalase, Ferritin, Transferrin und Coeruloplasmin sowie Mischungen daraus. Geeignete Additive stellen beispielsweise Aromen, Duftstoffe, Enzyme, Öle sowie Mischungen daraus dar.

Zur Herstellung des Komplexes aus CD und Gastmolekül kann eine Gastkomponente einer wässrigen Lösung zugefügt werden, welche gelöstes und/oder dispergiertes CD enthält und das gegebenenfalls gerührt, geschüttelt oder geknetet wird. Sowohl flüssige als auch feste hydrophobe Wirkstoffe können in einem passenden Lösungsmittel aufgelöst und zu der wässrigen CD-Verbindung hinzugefügt werden. Der CD-Einlagerungskomplex kann sich in manchen Fällen von der restlichen Lösung getrennt ablagern oder er kann durch Trocknung getrennt werden, einschließlich vor allem Sprühtroeknung und Kältetrocknung, bei letzterer einschließlich Sprüh-Gefrier-Trocknung. Passende Techniken werden beschrieben in US 4,775,749, US 4,777,162, US 4,831,022; und 5,189,149 sowie auch in "CD TECHNOLOGY, J. Szejtli, Ed., Kluwer Academic Publishers, Dodrecht, NL, 1988" und "COMPREHENSIVE SUPRAMOLECULAR CHEMISTRY; Vol. 3, CDs, J. L. Attwood, et al., Ed. 5, Elsevier, Oxford, U.K., 1996".

### Polymere

Polymere im Sinne der Erfindung umfassen anionisch und/oder kationisch modifizierte, vorzugsweise kationisch modifizierte, lineare oder verzweigte, synthetische und/oder aus natürlichen Quellen verfügbare Polymere, insbesondere solche mit linearen oder verzweigten Glucose-Ketten. Weitere bevorzugte Polymere sind ausgewählt aus der Gruppe bestehend aus Polyethylenglykol, Polyoxyethylen-Polyoxypropylen-Copolymeren, Polyanhydriden und Polysacchariden, besonders bevorzugt auf Cellulosematerialien-basierende Polysaccharide, sowie Guargummi, Pektin, Stärke, Dextran, Chitosan, Johannisbrot-Gummi, Curdlan, Pullulan, Traganth-Gummi, Seleroglucan, β-Glucane und Mischungen davon sowie Polymere mit gebundenen Ammoniumgruppen, insbesondere Polyvinylverbindungen mit quaternisiertem Stickstoff, Polyvinylalkohol und/oder Polyvinylpyrrolidon. In einer bevorzugten Ausführungsform ist das Polymer ein kationisch modifiziertes Polysaccharid mit gebundenen Ammoniumgruppen, besonders bevorzugt eines der im Folgenden beschriebenen Biopolymere ("Polyquats").

In einer bevorzugten Ausführungsform enthält die erfindungsgemäße waschaktive Zusammensetzung das kationisch modifizierte Polymer, vorzugsweise das kationisch modifizierte Polysaccharid, und das anionisch modifizierte CD in einem Mengenverhältnis von 1:100 bis 100:1, vorzugsweise 1:1 bis 1:50, besonders bevorzugt 1:10 bis 1:20.

### Biopolymere ("Polyquats")

Die erfindungsgemäßen Waschmittelzusammensetzungen enthalten vorzugsweise abgewandelte Biopolymere bestehend aus Hydroxypropylcellulose und Anteilen an Ammoniumgruppen, im folgenden als "Polyquaternium" oder "Polyquats" bezeichnet. Diese Polyquats, d. h. Cellulosederivate, werden allgemein mit Hilfe eines Trimethylammonium-substituierten Epoxids und durch Modifizierung mit Propylenoxid bzw. Ethylenoxid hergestellt.

Polyquats wie Polykationen oder Polyanionen sind ionisch modifizierte synthetische oder biologisch verfügbare bzw. abgewandelte Polymere. Deren Strukturen werden beispielsweise in "D. Braun, H. Cherdron, H. Ritter, Synthese und Charakterisierung von Polymeren, VCH Weinheim, 1999" beschrieben.

Weiterhin sind auch kationische Polymere als weichmachende Verbindungen geeignet. Zu den geeigneten kationischen Polymeren zählen die Polyquaternium-Polymere (PQ), wie sie im CTFA Cosmetic Ingredient Dictionary (The Cosmetic, Toiletry and Fragrance, Inc., 1997), insbesondere die auch als Merquats bezeichneten Polyquaternium-6-, Polyquaternium-7-, Polyquaternium-10-Polymere (Polymer JR, LR und KG Reihe von Amerchol), Polyquaternium-4-Copolymere, wie Pfropfcopolymere mit einen Cellulosegerüst und quaternären Ammoniumgruppen, die über Allyldimethylammoniumchlorid gebunden sind, kationische Cellulosederivate, wie kationisches Guar, wie Guarhydroxy-propyltriammoniumchlorid, und ähnliche quaternierte Guar-Derivate (z. B. Cosmedia^{®} Guar von Cognis oder die Jaguar^{®} Reihe von Rhodia), kationische quaternäre Zuckerderivate (kationische Alkylpolyglucoside), z. B. das Handelsprodukt Glucquat^{®} 100, gemäß CTFA-Nomenklatur ein "Lauryl-Methylgluceth-10-Hydroxypropyl-Dimoniumchlorid", Copolymere von PVP und Dimethylaminomethacrylat, Copolymere von Vinylimidazol und Vinylpyrrolidon, Aminosiliconpolymere und Copolymere. Ebenfalls einsetzbar sind polyquaternierte Polymere (z. B. Luviquat^{®} Care von BASF) und auch kationische Biopolymere auf Chitinbasis und deren Derivate, beispielsweise das unter der Handelsbezeichnung Chitosan^{®} (Vertrieb: Cognis) erhältliche Polymer.

Die erfindungsgemäßen Polyquats weisen zahlreiche nützliche Eigenschaften auf, welche vielfältige Anwendungsmöglichkeiten eröffnen. Hierzu zählen: wasserreinigend, als Fällungsmittel, nicht-reizend, emulgierend, oberflächenbenetzend, filmbildend, pflegend, faserreparierend, Conditioner- und antistatische Wirkung.

Die erfindungsgemäßen Polyquats bilden Oberflächenfilme und werden häufig in der Haarkosmetik verwendet. Der PQ-Film schützt das Haar, kann es reparieren und imprägnieren. Andere PQs haben eine antistatische Wirkung, verbessern die Kämmbarkeit oder sie formen das Haar. Sie werden in Haarsprays und Gelen eingesetzt. Darüber hinaus verfügen sie über weitere Eigenschaften, wie die Verminderung der Irritation durch oberflächenaktive Stoffe und Erhöhung der Effektivität von UV- Absorbern.

Polykationen oder Polyanionen sind ionisch modifizierte synthetische oder biologisch verfügbare bzw. abgewandelte Polymere. Deren Strukturen sind lange bekannt und werden beispielsweise in "D. Braun, H. Cherdron, H. Ritter, Synthese und Charakterisierung von Polymeren, VCH Weinheim, 1999" beschrieben.

### Weitere Additive

In der erfindungsgemäßen waschaktiven Zusammensetzung können ferner Waschmittel-Enzyme wie Lipasen und Peptidasen sowie Phosphate, Zeolithe und Wirkstoffe gegen Mikroben enthalten sein.

Im Sinne dieser Erfindung versteht man unter einem Waschmittel-Enzym einen schmutzaktiven Inhaltstoff. In Waschmitteln eingesetzte Enzyme umfassen vorzugsweise Proteasen, Amylasen, Lipasen und Cellulasen. Proteasen, wie die oben genannten Peptidasen, werden insbesondere zur Entfernung von proteinhaltigen Flecken, wie durch Gras, Blut, Ei und menschlichem Schweiß verursacht, eingesetzt. Amylasen werden insbesondere verwendet, um Rückstände von auf Stärkebasierenden Nahrungsmitteln wie Kartoffeln, Spaghetti, Pudding, Schokolade oder Soßen zu entfernen. Lipasen sind fettspaltende Esterasen und werden daher insbesondere zur Zersetzung von Fetten eingesetzt. Lipase ist in der Lage Fettflecke verursacht durch Fette, Butter, Salatöl, Saucen und die hartnäckigen Flecken auf Kragen und Manschetten zu entfernen. Cellulasen ändern die Struktur der Cellulosefaser auf Baumwolle und Baumwoll-Mischungen. Sie dienen insbesondere zur Aufhellung, Enthärtung und Schmutzentfernung.

Im Sinne dieser Erfindung versteht man unter Wirkstoffen gegen Mikroben ein Mittel oder Medikament, welches mikrobielle Infektionen, wie sie durch Bakterien oder Pilzen ausgelöst werden, bekämpfen kann. Geeignete Wirkstoffe gegen Mikroben stellen daher Antibiotika sowie Antimykotika dar, beispielweise Aminoglycosid-Antibiotika, Cephalosporine, Gyrasehemmer, Makrolid-Antibiotika, Penicilline, Sulfonamide und Trimethoprim, Tetrazykline, Tuberkulosemittel (Tuberkulostatika) wie Ethambutol, Isoniazid, Myambutol, Pyrazinamid, Rifampicin, Streptomycin, die Ketolide mit Telithromycin, Streptogramine wie Dalfopristin und Quinupristin und/oder kolloidiales Silber. Bevorzugt sind ferner natürliche Mikrobiotika, wie aus Kräuterpflanzen erhältlich sowie körpereigene Substanzen, beispielweise, Vitamin C, Echinacea, Zink und Knoblauch, Aloe Vera, Pampelmusesamenextrakt, Honigextrakt, Teebaumöl, Propolis, ätherische Öle aus Salbei, Molkosan, Bittermelone und/oder Olivenextrakt sowie Olivenblätter, Die erfindungsgemäße waschaktive Zusammensetzung kann ferner Tenside, Builder, Komplexbildner und/oder Textilweichmacher enthalten, wie im Folgenden beschrieben.

### Tenside

Im Rahmen der Erfindung versteht man unter Tensiden oberflächenaktive Stoffe, welche sowohl nichtionische als auch ionische Tenside umfassen.

Nichtionische Tenside umfassen polyoxyalkylierte wasserstoffhaltige hydrophobe Wirkstoffe wie polyoxyalkylierte fettige Säuren, fettige Alkohole und fettige Amine, sowie polyalkylierte aromatische Wasserabweiser wie Alkylphenole, z. B. Nonylphenol.

Nichtionische Waschmittel umfassen polyoxyalkylierte wasserstoffhaltige hydrophobe Wirkstoffe wie polyoxyalkylierte fettige Säuren, fettige Alkohole und fettige Amine, sowie polyalkylierte aromatische Wasserabweiser wie Alkylphenole d. h. Nonylphenol.

Beispiele von erfindungsgemäßen nichtionischen und ionischen Tensiden sind beispielsweise die in US 4,316,448 beschriebenen Tenside.

### Builder

Builder, oder auch Gerüststoffe, sind neben den Tensiden Inhaltsstoffe von Waschmitteln. Ursprünglich wurde bevorzugt Pentanatriumtriphosphat zur Senkung der Wasserhärte verwendet, d. h. zur Eliminierung von Ca- und Mg-Ionen, die zur Bildung von unerwünschten Kalkseifen führen. Da Phosphate zur Eutrophierung der Gewässer beitragen, werden heute bevorzugt mineralische Verbindungen wie Zeolith A (Sasil^{®}) als Ionentauscher verwendet. Der Zeolith ersetzt nicht alle Funktionen von Pentanatriumtriphosphat und wird z. B. durch Polycarboxylate, Nitrilotriessigsäure (NTA), Phosphonate, Soda und/oder Citronensäure ergänzt.

Im Rahmen der Erfindung versteht man unter einem Builder eine die Waschkraft erhöhende Substanz. Builder sind vor allem wirksam in Anwendungen, in denen eine geringe Wasserhärte notwendig ist. Builder werden verwendet, um das Wasser zu enthärten, also zur Eliminierung von Ca- und Mg-Ionen, die zur Bildung von Kalkseifen führen, und um zu verhindern, dass sich Schmutzpartikel auf dem Gewebe ablagern. Typische Builder sind alkalisierende Substanzen wie bsp. Natriumtripolyphosphat, Alkalimetall-Phosphate, Alkalimetall-Polycarboxylate, EDTA (Ethylendiamintetraessigsäure), Zeolite (A, P, X, AX), Nitrilotriessigsäure (NTA), Soda und/oder Citronensäure.

### Komplexbildner:

Die erfindungsgemäßen Waschmittel-Zusammensetzungen enthalten häufig ferner Komplexbildner. Dieses sind typischerweise Chelatbildner für Metallionen, vor allem solchen, die mit erhöhter Wasserhärte in Verbindung gebracht werden, z. B. Magnesium, Calcium und Eisen. Erfindungsgemäße Komplexbildner sind unter anderem die in US 3,985,669 und US 6,503,879, beschriebenen.

### Textilweichmacher:

Im Rahmen dieser Erfindung versteht man unter Textilweichmachern Additive, die Wäsche im Waschvorgang weich machen sollen. Erfindungsgemäße Textilweichmacher sind vorzugsweise die in den folgenden Dokumenten beschriebenen Substanzen:
US 6,114,299 nennt Weichmacher, die Stickstoff-funktionelle Polysiloxane und Polyisobutylenoligomere enthalten. US 4,978,363 offenbart Aminoalkylpolyorganosiloxane als Weichmacher, sowie deren fettige Säuresalze, welche eine Verbesserung der Gelbfärbung bewirken. US 5,540,952 beschreibt Piperidinyl- und Morpholinyl-ersetzte Organopolysiloxane. US 4,507,455 beschreibt Acylatdeorganopolysiloxane mit endständiger Amino-Funktionalität, während US 4,978,561 und US 5,100,991 ähnliche Produkte nennen, worin die Acylierung mit Lactonen N-(hydroxyalkyl) acylierte Produkte erzeugt. Die WO 2006/029746 A1 weist N-acylierte, α,ω-aminoalkyl-funktionale Organopolysiloxane, welche sowohl die Weichheit als auch den hydrophilen Charakter bewirken.

Weitere erfindungsgemäße Textilweichmacher sind quarternäre Ammoniumverbindungen, welche hydrophobe Gruppen enthalten. Beispiele hierfür sind z. B. fettartige Methyl-Ammoniumsalze. Zahlreiche quaternäre Ammoniumverbindungen, passend für Textil-Weichmacher sind feste anorganische Weichmacher, wie in US 5,019,292 beschrieben. Weitere erfindungsgemäße Textilweichmacher sind die in EP-A 0 040 562 und EP-A 0 239 910 beschriebenen Verbindungen.

Besondere Anforderungen werden an flüssige Waschmittelzusammensetzungen gestellt, da diese löslich sind und besprühte oder gestärkte Produkte unter stark oberflächenbehandelten und teilweise wässrigen Gegebenheiten dem Verlust von schaumbildenden Wirkstoffen unterworfen sind. Zusätzlich müssen die Zutaten in Flüssigrezepturen einschließlich Weichmachern, widerstandsfähig sein gegen Ablagerungen oder Trennungen. Anderenfalls könnte während der Lagerung eine nichthomogene Verbindung entstehen. Diese Nachteile können durch Verwendung der erfindungsgemäßen Textilweichmacher vermieden werden.

In US 5,643,862 werden ferner auf Silikon basierende Schaumverhüter gemischt mit einem wasserfreien nichtionischen Oberflächenbehandlungsmittel, welchem dann hydrophobes Silica hinzugefügt wird. Polyether und Glycol-modifizierte Organopolysiloxane haben sich ebenso als Schaumverhüter als nützlich erwiesen. Waschvergrauung verhindernde Mittel und optische Aufheller werden in US 4,659,497 aufgezeigt.

### Waschaktive Zusammensetzungen und Verwendung

Die erfindungsgemäße waschaktive Zusammensetzung kann sowohl in fester als auch in flüssiger Form vorliegen. Typische Rezepturen von Waschmitteln, sowohl flüssig als auch fest, werden in zahlreichen Patenten und Publikationen beschrieben. Feste Rezepturen umfassen Pulver, Sprays und komprimierte "Ziegel"-Rezepturen, und werden entweder durch Pressen oder durch Schmelzen der Mischungsbestandteile hergestellt, wie in US 4,680,134 beschrieben. Typische flüssige Waschmittelrezepturen, wie auch in den folgenden Beispielen beschrieben, werden z. B. in US 4,659,497 genannt, während feste, gekörnte Rezepturen in US 4,116,852, US 4,663,071 und US 5,019,282 beschrieben werden.

Die erfindungsgemäße waschaktive Zusammensetzung wird bevorzugt als Reinigungszusammensetzung in Industrie- und Haushalt, insbesondere zum Waschen von Wäsche, Geschirr, allen harten Oberflächen wie Oberflächen von Möbeln oder anderen Einrichtungsgegenständen sowie Fußbodenoberflächen, Modeaccessoires, Kosmetik und Industriedesign, Haaren, Haut, Obst, Gemüse sowie für die Oral- und/oder Wundreinigung verwendet.

Die erfindungsgemäß bevorzugte Verwendung von anionisch modifiziertem CD in Kombination mit Polyquat verbesssert die Qualität des Waschwassers durch Verminderung der Wasserhärte und Komplexierung der enthaltenen Magnesium- und Calciumionen.

Es konnte überraschend festgestellt werden, dass durch die Zugabe von den beschriebenen kationisch modifizierten Polymeren die Textilfaser mit einem Film überzogen und die elektrostatische Aufladung vermindert wird. Ferner erhält die Faser eine weiche Form und der Textilartikel fühlt sich weniger steif an, wie dies üblicherweise der Fall durch Salzablagerung oder Waschmittelreste ist. Bisher werden zur Weichmachung Weichspüler verwendet oder es werden kationische Tenside und Silikone den Waschmitteln zugesetzt.

Das erfindungsgemäß verwendete Polymer, insbesondere das Polyquaternium, in Kombination mit anionisch modifiziertem CD kann diese Eigenschaften ebenfalls an Textilprodukten zeigen, ohne dass Weichspüler eingesetzt werden müssen bzw. deren Einsatz kann erheblich verringert werden.

Die Erfindung betrifft insbesondere die Verwendung der beschriebenen aktiven Waschzusammensetzung als wässrige Lösungen, wässrige Gele, Pellets, Perlen oder Pulver, die als wasserverdünnbare multifunktionelle Wasch- und Reinigungsmittel für die hierin aufgeführten Anwendungen geeignet sind. Die erfindungsgemäßen aktiven Waschzusammensetzungen ermöglichen hierbei eine schonende Reinigung von Textilien und Oberflächen wie die zuvor genannten.

Die erfindungsgemäßen Zusammensetzungen sind aufgrund der Präsenz des ionisch modifizierten Cyclodextrins, der eine Tensidfunktion besitzt, besonderes geeignet zur Verwendung in allen Arten von Haushaltsprodukten, besonders bevorzugt als Kosmetika einschließlich Reinigungs- und Körperpflegemittel. Beispiele dafür sind Reinigung, Pflege, Schutz und Oberflächenbehandlung für Haus und Wohnung, Geschirrspülmittel, Seife, spezielle Gesichts-, Haar- und Hautpflege für Menschen mit Haar- und Hautproblemen, Reinigungslotion/Gesichtswasser, Haarfüller, Haarfestiger und Haarwaschmittel. Ferner sind die erfindungsgemäßen Zusammensetzungen aufgrund der Anwesenheit der ionisch modifizierten Cyclodextrine und deren Fähigkeit der Komplexbildung geeignet, die Waschmaschine vor Verkalkung, d.h. vor schädigenden Ca²⁺- und Mg²⁺-Ionen, zu schützen.

Die Erfindung betrifft ferner die Verwendung der anionisch modifizierten Cyclodextrine sowie diese enthaltende Zusammensetzungen im dental- oder medizinischen Bereich, z. B. als Desinfektionsmittel zur Wundreinigung oder in der Agro-Industrie als Zusatzstoff in Pflanzenschutzmitteln, bevorzugt in Kombination mit Herbiziden, Insektiziden, Photosynthesehemmern, Fungiziden und/oder Wachstumsmoderatoren.

Ferner wurde überraschend festgestellt, dass sich die anionisch modifizierten Cyclodextrine sowie diese enthaltende Zusammensetzungen wie die erfindungsgemäßen waschaktiven Zusammensetzungen in besonderem Maße eignen die Haarfestigkeit und das Haarvolumen zu verbessern. Daher sind die anionisch modifizierten Cyclodextrine sowie diese enthaltende Zusammensetzungen wie die erfindungsgemäßen waschaktiven Zusammensetzungen bevorzugt geeignet zur Verwendung in Kosmetika, insbesondere in Haarwaschmitteln, Haarfüllern und Haarfestiger sowie ferner in Antitranspirants, Deodorants, Haarwaschmitteln, Dusch- und Schaumbädern, Gels, insbesondere Duschgels, Cremes oder Salben.

Ein weiteres wichtiges Einsatzgebiet der anionisch modifizierten Cyclodextrine sowie diese enthaltende Zusammensetzungen ist ferner die Verwendung als Zusatzstoff in Lacken/Farben, in Metallbearbeitungsflüssigkeiten, in bauchemischen Produkten sowie in der Papierherstellung und - verarbeitung sowie in Kunststoffen. In diesen Einsatzbereichen liegt der Vorteil der erfindungsgemäßen Verwendung darin, dass der Geruch von Chemikalien verringert werden kann und dass Oberflächen benetzt sowie wasserunlösliche Stoffe in Wasser emulgiert oder dispergiert werden können. Insbesondere liegt die Wirkung in der Verbesserung der Benetzungseigenschaften von Lackschichten.

Die Erfindung betrifft ferner die Verwendung der anionisch modifizierten Cyclodextrine für die Herstellung von Kunststoff- und Polymerdispersionen durch Emulsionspolymerisation, insbesondere bei der Herstellung von Polyvinylchlorid, Polystyrol-, Polyacrylat- und Polyvinylacetatcopolymeren.

Die Erfindung betrifft des Weiteren wässrige Lösungen, wässrige Gele, Pellets, Perlen oder Pulver, die Anteile an anionisch- und/oder kationisch- modifizierten Cyclodextrinen in Kombination mit anionisch und/oder kationisch modifizierten linear oder verzweigten synthetischen und/oder aus natürlichen Quellen verfügbaren Polymeren als Komplex enthalten, sowie anionisch- und/oder kationisch- modifizierte Cyclodextrine als Tensid für industrielle Anwendungen und/oder als Emulsifier für die Emulsionspolymerisation. Im Gegensatz zu den oben beschriebenen Anwendungen der Cyclodextrine als waschaktive Substanz ist bei den reinen Tensidanwendungen das Polyquat als Gegenion nicht essentiell.

Die Erfindung ist ferner dadurch gekennzeichnet, dass die beanspruchten Cyclodextrine und/oder verzweigten synthetischen und/oder aus natürlichen Quellen verfügbaren Polymere ausreichende Anteile an nichtionischen und/oder ionischen Komponenten tragen können.

Ein zentrales Merkmal der Erfindung besteht weiterhin darin, dass keine allergieauslösenden Substanzen in der Zusammensetzung enthalten sind. Ferner ist die erfindungsgemäße Zusammensetzung geruchsneutral und kann Gerüche/Parfüme binden. Sie trägt so zur Entfernung schädlicher oder unangenehmer Gerüche bei.

Die erfindungsgemäße Zusammensetzung ist ferner in besonderem Maße für Allergiker geeignet, da sie keine allergieauslösenden Substanzen enthält. Sie kann darüber hinaus aktive Wirkstoffe, z.B. aus der Gruppe der Insekten-Repellents, Pflanzenschutzwirkstoffe, Kosmetikwirkstoffe, Medikamentwirkstoffe, UV- und Lichtschutzmittel sowie Antioxidantien gegen Ozon enthalten und eröffnet somit vielseitige Einsatzmöglichkeiten wie hierin beschrieben.

### Beispiele zur näheren Beschreibung der Erfindung:

Die aufgeführten Beispiele dienen der Erläuterung der Erfindung. Sie bedeuten nicht, dass die vorliegende Erfindung darauf beschränkt ist.

### Beispiel 1

### Herstellung von β-CD-sulfobutylether

4,37 g (3,85 mmol) getrocknetes β-CD werden in einem Zweihalskolben vorgelegt und in 10 ml 25 Gew.% Natriumhydroxidlösung gelöst. Unter Rückflusskühlung werden über einen Tropftrichter 4,6 g (3,37 mmol) Butansulfon langsam unter starkem Rühren zugegeben. Die Reaktionslösung wird 24 h lang bei 47 °C erhitzt. Nach Abschluss der Reaktion werden 20 ml destilliertes Wasser zugegeben und die Lösung neutralisiert. Das Produkt wird nach Lyophilisierung erhalten. Ausbeute: 86%

**FT-IR** (cm⁻¹): 3362 (OH), 2936 (CH₂), 1644, 1348 (SO₂),1302 (OH), 1167, 1150, 1023, 997, 907, 837,781,707,580,503

**¹H-NMR** (δ ppm): 1,7-1,89 (m), 2,12-2,24 (m), 2,81-2,89 (m), 3,21-3,27 (m), 3,52-3,78 (CD), 4,98 (s) (CD), 5,12 (s) (CD)

**MALDI-TOF MS:** Matrix DHB, Acetonitril/Wasser (1:10) 1315,5 (mono-β-CD-sulfobutylether + 2Na⁺), 1467,5 (di-β-CD-sulfobutylether + 2Na⁺+ OH)

### Beispiel 2

### Modifizierung von β-CD mit Maleinsäureanhydrid

5,68 g (5 mmol) getrocknetes β-CD werden in einem Zweihalskolben vorgelegt und in 30 ml DMF gelöst. Unter Rückflusskühlung werden 4,9 g (50 mmol) Maleinsäureanhydrid zugegeben. Die Reaktionslösung wird 10 h lang bei 80 °C erhitzt. Anschließend werden 30 ml Trichloromethan zugegeben und ein weißer Niederschlag erhalten. Der Niederschlag wird abfiltriert und anschließend mit Aceton dreimal gründlich gewaschen. Das Produkt wird unter Vakuum getrocknet. Ausbeute: 73%

**FT-IR** (cm⁻¹): 3500 (s, OH), 2900 (w, CH₂), 1720 (s, C=O), 1620 (m, CH=CH), 1040 (s, C-O). Elementaranalyse: C₄₂H₆₅0₃₅[OCOCH=CHCOOH]₅. Theoretisch: C: 45.8%; H: 4.9%, gefunden: C: 44.0%; H: 6.3%.

### Beispiel 3

### Herstellung von β-CD Octenylsuccinatester

8,4 g (7,4 mmol) getrocknetes β-CD werden in einem Kolben vorgelegt, in 50 ml Pyridin gelöst und auf 95-100 °C erhitzt. 3,31 g (15,8 mmol) 1-Octenyl-Succinicanhydrid bzw. Dodecenyl-Succinicanhydrid werden in Pyridin (50 ml) gelöst und danach zur erhitzten Lösung gegeben. Es wird 24 h lang bei 100 °C gerührt. Nach Abschluss der Reaktion werden 10 ml destilliertes Wasser zugegeben und das Lösemittel im Vakuum abgezogen. Das Produkt wird 24 h mit einer Soxhletapparatur über 700 ml Aceton extrahiert. Ausbeute: 80%

**FT-IR** (cm⁻¹): 3340 (v O-H), 2922 (CH₂), 1720, 1100 (COOH)

**¹H-NMR** (δ ppm): 5,78 (secondary OH, CD), 5,4 (m, C=C), 4,85 (C₁-H, CD), 4,48 (primary OH, CD), 3,36-3,66 (CH, CD), 2,1; 1,25 (CH₂, aliphatic), 0,88 (triplet, CH₃)

Elementaranalyse: Theoretisch: C: 48,2%; H: 6,6%, gefunden C: 48.8%; H: 7,0%.

### Beispiel 4

### Waschaktive Komplexbildung aus β-CD Octenylsuccinatester und Polyquaternium-16

1 g β-CD Octenylsuccinatester und 1 bis 2 g Polyquaternium-16 (PQ16) werden in 100 ml PufferLösung (pH 10) unter kräftigen Rühren gelöst. Der Komplex wird in ca. 30 min gebildet. Die erhaltene Lösung hat einen pH zwischen 6-7.

### Dynamische Lichtstreuung (DLS):

β-CD Octenyl Succinatester: 1,1 nm

PQ-16: 1nm

Komplex (β-CD Octenyl Succinatester:PQ-16)(1eq:1eq): 7,5 nm

Komplex (β-CD Octenyl Succinatester:PQ-16)(1eq:2eq): 5,0 nm

### Beispiel 5

### Herstellung von β-CD Octenylsuccinatester (β-CD/OSA)

### β-CD/OSA 1:2,5

In einem Rundkolben werden 34 g (30 mmol) β-Cyclodextrin in 350 ml Na₂CO₃-Lösung (33 g/L H₂O) vorgelegt. Bei pH 11 werden 15 g (71 mmol) 2-Octen-1-ylbernsteinsäureanhydrid langsam beim Rühren dazugegeben. Nach der Neutralisation wird über Nacht gerührt. Nach 22 h wird die Apparatur abgebaut. Das Versuchspräparat wird im 1000er Dialyseschlauch über Nacht gereinigt. Zur Aufbereitung wird das Produkt am Rotationsverdampfer bei 40 °C eingeengt und am Gefriertrockner bis zur Pulverkonsistenz getrocknet. Die Ausbeute beträgt 19,8 g.

**MALDI-TOF MS:** Matrix DHB, Acetonitril/Wasser (1:10)

**FT-IR** (cm⁻¹): 3300 (O-H), 2923 (CH₂), 2360(...), 2324(...), 1738 (R₂C=O), 1645 (C=C), 1564 (RCOO), 1402 (RCOO)

### β-CD/OSA 1:2

In einem Rundkolben werden 113,6 g (100 mmol) β-Cyclodextrin in 450 ml Na₂CO₃-Lösung (33 g/L H₂O) vorgelegt. Bei pH 12 werden 42 g (200 mmol) 2-Octen-1-ylbernsteinsäureanhydrid langsam beim Rühren dazu gegeben und über Nacht gerührt. Nach 15 h wird die Apparatur abgebaut. Zur Aufbereitung wird das Produkt am Rotationsverdampfer bei 40 °C eingeengt und am Gefriertrockner bis zur Pulverkonsistenz getrocknet. Die Ausbeute beträgt 167,7 g.

**MALDI-TOF MS:** Matrix DHB, Acetonitril/Wasser (1:10)

1157.4 (β-CD + Na⁺), 1367.6 (mono-β-CD-Octenylsuccinatester), 1577.7 (di-β-CD-Octenylsuccinatester + Na⁺), 1787.8 (tri-β-CD-Octenylsuccinatester + Na⁺), 1997.9 (tetra-β-CD-Octenylsuccinatester + Na⁺), 2208.0 (penta-β-CD-Octenylsuccinatester + Na⁺)

**FT-IR** (cm⁻¹): 3355 (O-H), 2923 (CH₂), 2854(CH₂), 1723 (R₂CO), 1654 (C=C), 1563 (RCOO), 1399 (RCOO)

### β-CD/OSA 2:1

In einem Rundkolben werden 22,7 g (20 mmol) β-Cyclodextrin in 250 ml Na₂CO₃-Lösung (33 g/L H₂O) vorgelegt. Bei pH 12 werden 2,1 g (10 mmol) 2-Octen-1-ylbernsteinsäureanhydrid langsam beim Rühren dazu gegeben und über Nacht gerührt. Nach 24 h wird es neutralisiert und weitere 24 h über Nacht gerührt. Zur Aufbereitung wird das Produkt am Rotationsverdampfer bei 40 °C eingeengt und am Gefriertrockner bis zur Pulverkonsistenz getrocknet. Die Ausbeute beträgt 34,5 g.

**MALDI-TOF MS:** Matrix DHB, Acetonitril/Wasser (1:10)

1157.4 (β-CD + 1Na⁺), 1367.5 (mono-β-CD-Octenylsuccinatester)

### β-CD/OSA 1:1

In einem Rundkolben werden 22,7 g (20 mmol) β-Cyclodextrin in 300 ml Na₂CO₃-Lösung (33 g/L H₂O) vorgelegt. Bei pH 11 werden 4,2 g (20 mmol) 2-Octen-1-ylbernsteinsäureanhydrid langsam beim Rühren dazu gegeben. Nach 6 h wird auf pH 7 neutralisiert und die Apparatur abgebaut. Zur Aufbereitung wird das Produkt am Rotationsverdampfer bei 40 °C eingeengt und am Gefriertrockner bis zur Pulverkonsistenz getrocknet. Die Ausbeute beträgt 35 g.

**MALDI-TOF MS:** Matrix DHB, Acetonitril/Wasser (1:10)

1157.4 (β-CD + 1Na⁺), 1367.6 (mono-β-CD-Octenylsuccinatester), 1577.7 (di-β-CD-Octenylsuccinatester + 1Na⁺), 1787.8 (tri-β-CD-Octenylsuccinatester + 1Na⁺), 1998.0 (tetra-β-CD-Octenylsuccinatester + 1Na⁺)

### β-CD/OSA 1:1,5

In einem Rundkolben werden 170 g (150 mmol) β-Cyclodextrin in 1500 ml Na₂CO₃-Lösung (33 g/L H₂O) vorgelegt. Bei pH 11 werden 47,7 g (225 mmol) 2-Octen-1-ylbernsteinsäureanhydrid langsam beim Rühren dazu gegeben. Nach 24 h wird auf pH 7 neutralisiert und die Apparatur abgebaut. Zur Aufbereitung wird das Produkt am Rotationsverdampfer bei 40 °C eingeengt und am Gefriertrockner bis zur Pulverkonsistenz getrocknet.

### Beispiel 6

### Herstellung von β-Cyclodextrin-Octenyl-Dodecenylsuccinatester (β-CD/OSA/DSA)

In einem Rundkolben wird geeignete Menge an β-Cyclodextrin in 45 °C warmer Na₂CO₃-Lösung (33 g/L H₂O) vorgelegt. Bei pH 11-12 wird entsprechende Menge an 2-Octen-1-ylbernsteinsäureanhydrid langsam beim Rühren dazu gegeben. Gleich danach wird die entsprechende, in 50 ml Na₂CO₃-Lösung (33 g/L H₂O) bei 45 °C gelöste Menge an 2-Dodecen-1-ylbernsteinsäureanhydrid hinzugefügt und 2 h bei 45 °C im Wasserbad gerührt. Es wird mit HCl (c=1 mol/L) neutralisiert und bei RT über Nacht gerührt. Nach Ablauf der benötigten Zeit wird die Apparatur abgebaut. Zur Aufbereitung wird das Produkt am Rotationsverdampfer bei 40 °C eingeengt und am Gefriertrockner bis zur Pulverkonsistenz getrocknet.

| | **1.** | **2.** |
|---|---|---|
| Verhältnis (β-CD/OSA/DSA) | 1 : 1,5 : 0,5 | 1:1:0,5 |
| β-CD | 34g (30mmol) | 34g (30mmol) |
| OSA | 9,5g (45mmol) | 6,4g (30mmol) |
| DSA | 4g (15mmol) | 4g (15mmol) |
| Na₂CO₃-Lösung | 350ml | 350ml |
| Zeit | 24h | 24h |
| Ausbeute | 55,2g | 52,5g |

### CD/OSA/DSA 1 : 1,5 : 0,5

**MALDI-TOF MS:** Matrix DHB, Acetonitril/Wasser (1:10)

1157.4 (β-CD + Na⁺), 1367.6 (β-CD-mono-Octenylsuccinatester + Na⁺), 1577.7 (β-CD-di-Octenylsuccinatester + Na⁺), 1633.7 (β-CD-mono-Octenyl-mono-Dodecenylsuccinatester + Na⁺), 1787.8 (β-CD-tri-Octenylsuccinatester + Na⁺), 1843.8 (β-CD-di-Octenyl-mono-Dodecenylsuccinatester + Na⁺),1997.9 (β-CD-tetra-Octenylsuccinatester + Na⁺), 2054.0 (β-CD- tri-Octenyl-mono-Dodecenylsuccinatester + Na⁺)

### Beispiel 7

### Herstellung von β-Cyclodextrin-Dodecenylsuccinatester (β-CD/DSA)

In einem Rundkolben wird eine geeignete Menge an β-Cyclodextrin in 45 °C warmer Na₂CO₃-Lösung (33 g/L H₂O) vorgelegt. Bei pH 11-12 wird die entsprechende, in 50 ml Na₂CO₃-Lösung (33 g/L H₂O) bei 45 °C gelöste Menge an 2-Dodecen-1-ylbernsteinsäureanhydrid langsam beim Rühren dazu gegeben und 2 h gerührt. Es wird mit HCl (c=1 mol/L) neutralisiert und bei RT über Nacht gerührt. Nach Ablauf der benötigten Zeit wird die Apparatur abgebaut. Zur Aufbereitung wird das Produkt am Rotationsverdampfer bei 40 °C eingeengt und am Gefriertrockner bis zur Pulverkonsistenz getrocknet.

| | **1.** | **2.** |
|---|---|---|
| Verhältnis (β-CD/DSA) | 1 : 2 | 1 : 1 |
| β-CD | 34g (30mmol) | 68g (60mmol) |
| DSA | 16g (60mmol) | 16g (60mmol) |
| Na₂CO₃-Lösung | 400ml | 800ml |
| Zeit | 24h | 24h |
| Ausbeute | 60,8g | 81,1g |

### β-CD/DSA 1 : 2

**MALDI-TOF MS:** Matrix DHB, Acetonitril/Wasser (1:10)

1157.4 (β-CD + Na⁺), 1423.6 (mono-β-CD-Dodecenylsuccinatester + Na⁺), 1689.8 (di-β-CD-Octenylsuccinatester + Na⁺), 1957.0 (tri-β-CD-Dodecenylsuccinatester + Na⁺)

**FT-IR** (cm⁻¹): 3274 (O-H), 2922 (CH₂), 2853(...), 2360(...), 2324(...), 1738 (R₂CO), 1651 (C=C), 1566 (RCOO)

### β-CD/DSA 1 : 1

**MALDI-TOF MS:** Matrix DHB, Acetonitril/Wasser (1:10)

1157.4 (β-CD + Na⁺), 1423.6 (mono-β-CD-Dodecenylsuccinatester + Na⁺), 1689.8 (di-β-CD-Octenylsuccinatester + Na⁺)

### Beispiel 8

### Waschaktive Zusammensetzung*

| | |
|---|---|
| β-Cyclodextrin-Octenyl-Dodecenylsuccinatester | 25,0 % |
| Polyquaternium 10 (Quaternäre Hydroxyethylcellulose) | 2,5 % |
| Enzyme | 0,5 % |
| Fluoreszierende Aufheller | 0,3 % |
| Wasser | ad 100 % |

* alle Prozentangaben als Gewichtsprozent

### Vergleichsbeispiel 1

### Rezeptur eines Woll- und Feinwaschmittels*

| | |
|---|---|
| Tenside, ionisch Alkylbenzolsulfonat (ABS) | bis 5 % |
| Tenside, nichtionisch Fettalkoholpolyglykolether | 15 bis 30 % |
| Komplexbildner Pentannatriumtriphosphat | 20 bis 35 % |
| Enzym Protease | 0,5 bis 0,8 % |
| Korrosionsinhibitor Wasserglas | 2 bis 5 % |
| Schaumregulatoren, Seifen | 2 bis 3 % |
| Vergrauungsinhibitor Carboxymethylcellulose | 0,5 bis 1,5 % |
| Duftstoffe | 0,1 bis 0,2 % |
| Stellmittel Natriumsulfat | 30 bis 60 % |

^{*} alle Prozentangaben als Gewichtsprozent

### Vergleichsbeispiel 2

### Rezeptur eines Vollwaschmittels*

| | |
|---|---|
| Tenside, ionisches ABS | bis 5 % |
| Tenside, nichtionischer Fettalkoholpolyglykolether | 10 bis 15 % |
| Komplexbildner Pentantriumtriphosphat, SASIL | 30 bis 40 % |
| Bleichmittel Natriumperborat | 20 bis 30 % |
| Magnesiumsilikat | 0,2 bis 2,0 % |
| Schaumregulatoren Seifen, Silikonöle | 0,2 bis 3,0 % |
| Vergrauungsinhibitor Carboxymethylcellulose | 0,5 bis 2,0 % |
| Weißtöner Stilben-, Pyrazolinderivate | 0,1 bis 0,3 % |
| Enzyme Proteasen, Lipasen | 0,5 bis 0,8 % |
| Korrosionsinhibitor Wasserglas | 3,0 bis 6,0 % |
| Duftstoffe, Parfümöle | 0,1 bis 0,2 % |
| Stellmittel Natriumsulfat | 5,0 bis 15% |

* alle Prozentangaben als Gewichtsprozent

### Vergleichsbeispiel 3

### Waschaktive Zusammensetzung*

| | |
|---|---|
| Wasserenthärter Natriumtripolyphosphat | 38,0% |
| Tensid Natriumalkylsulfonat | 25,0 % |
| Oxidationsmittel Natriumperborat tetrahydrat, Natriumpercarbonat | 25,0 % |
| Seife | 3,0 % |
| Füllstoff, Wasserenthärter Natriumsulfat | 2,5 % |
| Natriumcarboxymethylcellulose/Natriumpolyacrylat/Polyethylenglycol (Schmutz Suspensionsmittel/Vergrauungsinhibitor) | 1,6 % |
| Bindemittel Natriummetasilicat | 1,0 % |
| Enzym Protease | 0,8% |
| Fluoreszierende Aufheller | 0,3 % |
| Schaumregulierungsmittel | Spuren |
| Parfüm | Spuren |
| Wasser | ad 100 % |

^{*} alle Prozentangaben als Gewichtsprozent

## Patentansprüche

1. Waschaktive Zusammensetzung **dadurch gekennzeichnet, dass** diese ein kationisch modifiziertes Polymer und ein anionisch modifiziertes alpha-, beta- und/oder gamma-Cyclodextrin enthält.

2. Waschaktive Zusammensetzung gemäß Anspruch 1, **dadurch gekennzeichnet, dass** das kationisch modifizierte Polymer ein kationisch modifiziertes Polysaccharid mit gebundenen Ammoniumgruppen ist.

3. Waschaktive Zusammensetzung gemäß Anspruch 1, **dadurch gekennzeichnet, dass** das kationisch modifizierte Polymer eine Polyvinylverbindung mit quaternisiertem Stickstoff ist.

4. Waschaktive Zusammensetzung gemäß Anspruch 1, **dadurch gekennzeichnet, dass** das kationisch modifizierte Polymer ein kationisch modifiziertes Polysaccharid mit gebundenen Ammoniumgruppen und das anionisch modifizierte alpha-, beta- und/oder gamma-Cyclodextrin ein Cyclodextrin mit Carboxylat-, Sulfat- und/oder Phosphatgruppen ist.

5. Waschaktive Zusammensetzung gemäß einem der vorhergehenden Ansprüche, **dadurch gekennzeichnet, dass** das kationisch modifizierte Polysaccharid und das anionisch modifizierte Cyclodextrin in einem Mengenverhältnis von 1:100 bis 100:1, bevorzugt 1:1 bis 1:50, besonders bevorzugt 1:10 bis 1:20 vorliegen.

6. Waschaktive Zusammensetzung gemäß einem der vorhergehenden Ansprüche, **dadurch gekennzeichnet, dass** sich in dem anionisch modifizierten Cyclodextrin ein Gastmolekül aus der Gruppe bestehend aus Aromastoffen, Stabilisatoren gegen UV Licht, Oxidation oder Ozon, und/oder ein Wirkstoff gegen Insekten befindet.

7. Waschaktive Zusammensetzung gemäß einem der vorhergehenden Ansprüche, zusätzlich enthaltend mindestens einen weiteren Bestandteil ausgewählt aus der Gruppe bestehend aus Waschmittel-Enzymen, bevorzugt Proteasen, Lipasen, Esterasen und/oder Cellulasen, Phosphaten, Zeolithen und Wirkstoffen gegen Mikroben.

8. Anionisch modifiziertes Cyclodextrin, welches an 1, 2, 3, 4, 5, 6 oder mehr OH-Gruppen mit einer C₆-C₂₀, bevorzugt einer C₆-C₁₀, besonders bevorzugt einer C₈-Alkylkette verestert oder verethert ist, wobei die Alkylkette mindestens eine Carboxylatgruppe trägt.

9. Verwendung des anionisch modifizierten Cyclodextrins gemäß Anspruch 8, zum Waschen von Wäsche, Geschirr, Haaren, Haut, Obst, Gemüse und für die Oral- und/oder Wundreinigung.

10. Verwendung des anionisch modifizierten Cyclodextrins gemäß Anspruch 8, als Tensid, in Pflanzenschutzmitteln, bevorzugt in Kombination mit Herbiziden, Insektiziden, Photosynthesehemmern, Fungiziden und/oder Wachstumsmoderatoren, in Farben und/oder Lacken und in der Emulsionspolymerisation, oder in Kosmetika, bevorzugt in Haarwaschmitteln, Haarfüllern und Haarfestigern.

11. Verwendung einer waschaktiven Zusammensetzung gemäß einem der Ansprüche 1 bis 7 zum Waschen von Wäsche, Geschirr, Haaren, Haut, Obst, Gemüse und für die Oral- und/oder Wundreinigung oder in Kosmetika, bevorzugt in Haarwaschmitteln, Haarfüllern und Haarfestigern.
